(19) Europäisches Patentamt
European Patent Office
Office européen des brevets

(11) **EP 4 571 076 A1**

(12) **DEMANDE DE BREVET EUROPEEN**

(43) Date de publication:
**18.06.2025 Bulletin 2025/25**

(21) Numéro de dépôt: **23307169.5**

(22) Date de dépôt: **11.12.2023**

(51) Classification Internationale des Brevets (IPC):
**F02C 7/05** (2006.01)   **F02C 7/055** (2006.01)
**F02K 3/02** (2006.01)

(52) Classification Coopérative des Brevets (CPC):
**F02C 7/055; F02C 7/05; F02K 3/02;** F05D 2220/325

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(71) Demandeurs:
  • **Safran Aero Boosters**
    **4041 Herstal (BE)**
  • **SAFRAN AIRCRAFT ENGINES**
    **75015 Paris (FR)**

(72) Inventeurs:
  • **DUBOSC, Matthieu Pierre Michel**
    **77550 MOISSY-CRAMAYEL (FR)**

  • **ANTON, Pierre Grégoire**
    **77550 MOISSY-CRAMAYEL (FR)**
  • **BINDER, Anthony**
    **77550 MOISSY-CRAMAYEL (FR)**
  • **DIEUDONNE, Sadim**
    **77550 MOISSY-CRAMAYEL (FR)**
  • **DURIEU, François**
    **4041 HERSTAL (BE)**
  • **PRINCIVALLE, Rémy Henri Pierre**
    **4041 HERSTAL (BE)**

(74) Mandataire: **Gevers & Orès**
    **Immeuble le Palatin 2**
    **3 Cours du Triangle**
    **CS 80165**
    **92939 Paris La Défense Cedex (FR)**

(54) **MODULE DE TURBOMACHINE COMPRENANT DES AUBES ROTORIQUES ET DES AILETTES, ET TURBOMACHINE CORRESPONDANTE**

(57)   Module de turbomachine comprenant :
- un rotor (4) centré sur un axe longitudinal (X),
- une pluralité d'aubes rotoriques (3) montées sur le rotor (4) et s'étendant radialement par rapport à l'axe longitudinal (X), et
- un bec de séparation (7) disposé en aval des aubes rotoriques (3) et séparant un flux d'air traversant les aubes rotoriques (3) en un flux primaire (F1) et en un flux secondaire (F2), le bec de séparation (4) comprenant un bord amont (12) délimitant une entrée (16) d'une veine primaire dans laquelle circule le flux primaire. Le module comprend également des ailettes (15) montées solidaires en rotation du rotor (4) et s'étendant radialement par rapport à l'axe longitudinal, les ailettes (15) étant agencées en aval des aubes rotoriques (3) et en amont du bec de séparation (7).

**Fig.1**

EP 4 571 076 A1

## Description

### Domaine technique de l'invention

La présente invention concerne le domaine des turbomachines d'aéronef. L'invention concerne plus précisément les moyens permettant d'éviter l'ingestion d'objets étrangers par des organes de la turbomachine.

### Arrière-plan technologique

Les turbomachines d'aéronef sont souvent confrontées à l'ingestion de corps étrangers dénommés FOD qui est l'acronyme de l'expression anglaise « Foreign Object Damage » et qui peuvent présenter un risque d'endommagement des organes internes de la turbomachine, et notamment la chambre de combustion. Ce risque d'ingestion est accru avec la diminution du nombre d'aubes qui sont disposées à l'entrée de la turbomachine et de leurs vitesses de rotation. Les turbomachines du type « open rotor » ou « open fan » qui sont équipées d'une hélice avec un nombre par exemple de quatorze aubes rotoriques non carénées sont les plus exposées à ce risque d'ingestion.

Les objets étrangers tels que des oiseaux qui pénètrent dans le coeur de la turbomachine ont des impacts non négligeables sur le dimensionnement des différents organes de la turbomachine, tels que le compresseur, la chambre de combustion, et/ou la turbine et sur les jeux axiaux entre les différents étages dans l'ensemble de compresseur et de la turbine.

Cependant, dans le cadre des nouvelles certifications aéronautiques qui ont été imposées après de nombreux incidents issus de collisions avec des oiseaux, dont le plus connu à engendrer l'amerrissage d'un aéronef, les objets étrangers ne doivent pas générer de dégâts importants sur la structure des organes de la turbomachine, ni engendrer l'extinction de la chambre de combustion si ceux-ci atteignent cette dernière avec un risque dramatique.

Il existe un besoin de résoudre tout ou partie des inconvénients précités.

### Résumé de l'invention

L'objectif de la présente invention est de fournir une solution permettant d'éviter l'ingestion de corps étranger au niveau du coeur de la turbomachine tout étant économique et facile à mettre en oeuvre.

Nous parvenons à cet objectif conformément à l'invention grâce à un module de turbomachine comprenant :

- un rotor centré sur un axe longitudinal,
- une pluralité d'aubes rotoriques montées sur le rotor et s'étendant radialement par rapport à l'axe longitudinal, et
- un bec de séparation disposé en aval des aubes rotoriques et séparant un flux d'air traversant les aubes rotoriques en un flux primaire et en un flux secondaire, le bec de séparation comprenant un bord amont délimitant une entrée d'une veine primaire dans laquelle circule le flux primaire,

le module comprenant des ailettes montées solidaires en rotation du rotor et s'étendant radialement par rapport à l'axe longitudinal, les ailettes étant agencées en aval des aubes rotoriques et en amont du bec de séparation.

Ainsi, cette solution permet d'atteindre l'objectif susmentionné. La mise en place d'ailettes sur le rotor du module qui tourne autour de l'axe longitudinal donne un effet de centrifugation aux ailettes qui permet d'une part, de découper ou hacher chaque corps étranger tel que glace, volatile et donc de réduire le volume du corps étranger qui pourrait pénétrer dans le coeur de la turbomachine en aval des ailettes et d'autre part, d'entrainer par effet centrifuge le corps étranger radialement vers l'extérieur et loin de l'entrée de la veine primaire. Les ailettes sont placées dans un espace qui n'était pas occupé sur le rotor et sont faciles à mettre en oeuvre. Leurs agencements sur le rotor engendrent peu de modifications structurelles du rotor et de l'ensemble du module de la turbomachine.

Le module de turbomachine comprend également l'une ou plusieurs des caractéristiques suivantes, prises seules ou en combinaison :

- le nombre d'ailettes est supérieur au nombre d'aubes rotoriques.
- le nombre d'ailettes est égal à deux fois le nombre d'aubes rotoriques.
- chaque ailette comprend une extrémité de tête libre qui est disposée radialement à l'intérieur d'une droite inclinée par rapport à l'axe longitudinal (X) et passant par un point minimum du bec de séparation, en formant un angle d'inclinaison compris entre 15° et 30°.
- chaque ailette présente un rayon externe qui est fonction de la position axiale de chaque ailette par rapport au bec de séparation, une relation entre le rayon externe et la position axiale étant exprimée par la formule suivante :

$$\text{Rext}_{\text{ailette}}(x) \geq R_{\text{bec}} + D2 * \tan(\alpha) - p$$

Avec,

Rext étant le rayon externe à l'extrémité de tête de chaque ailette, au niveau d'un point entre un bord d'attaque et un bord de fuite de l'ailette, mesuré à partir de l'axe longitudinal,
Rbec étant le rayon du bec de séparation mesuré au niveau du bord amont du bec de séparation et à partir de l'axe longitudinal,
D2 étant la distance axiale prédéterminée entre deux points et définie entre le bec de séparation et un point de tête de l'ailette situé entre son bord d'attaque et son bord de fuite,

p présentant une valeur correspondant sensiblement à un rayon d'un corps d'un objet étranger de forme sensiblement circulaire et ayant un poids d'environ 1 kg,

α étant l'angle d'inclinaison de la droite inclinée.

- chaque ailette est inclinée par rapport à l'axe radial perpendiculaire à l'axe longitudinal en formant au moins un angle dièdre, l'angle dièdre étant compris entre 10° et 45°.
- chaque ailette comprend une pluralité de sections transversales qui sont empilées le long d'une ligne d'empilement entre l'extrémité de pied et l'extrémité de tête, un premier angle dièdre étant mesuré entre une première droite passant par le bord d'attaque d'une première section et d'une deuxième section, et l'axe radial.
- chaque ailette est inclinée de manière opposée au sens de rotation du rotor.
- les ailettes sont équipées de moyens de dégivrage.

L'invention concerne une turbomachine comprenant au moins un module de turbomachine tel que décrit ci-dessus.

L'invention concerne également un aéronef équipé d'une telle turbomachine.

**Brève description** des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :

- La figure 1 illustre une coupe axiale et partielle d'un exemple de turbomachine selon l'invention ;
- La figure 2 représente de manière schématique l'empilement radial, vu de face, de deux sections N et N+1 d'au moins une ailette selon l'invention ;
- La figure 3 représente de manière schématique une vue radiale, selon un axe perpendiculaire à l'axe du rotor, de deux sections N et N+1 d'au moins une ailette avec représentation des éléments caractéristiques d'un profil (ou section) d'ailette selon l'invention ; et
- La figure 4 est une vue de face schématique de la trajectoire d'un objet étranger par rapport à une ailette selon l'invention.

**Description détaillée de l'invention**

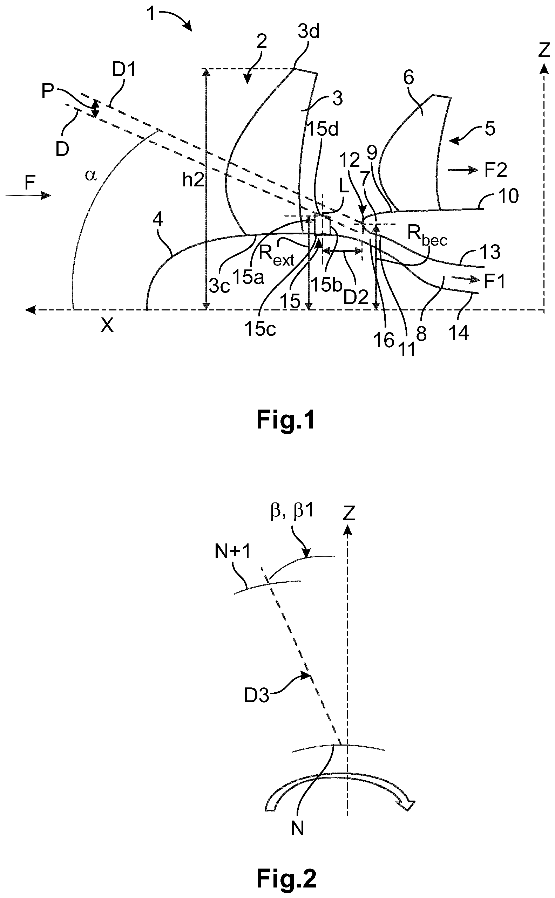

La figure 1 représente une turbomachine 1, à plusieurs flux, destinée à être montée sur un aéronef tel qu'un avion. La turbomachine 1 représentée comprend une hélice 2 non carénée. Une telle turbomachine est un turbopropulseur et est connue sous l'expression anglaise de « open rotor » ou « unducted fan » ou « open fan ». Dans cette catégorie de turbomachine, il existe celles qui ont deux hélices non carénées et contrarotatives (connues sous le sigle anglais UDF pour « Unducted Dual Fan ») ou celles ayant une seule hélice non carénée et un redresseur qui est non caréné également et qui comprend plusieurs aubes de stator (connues sous le sigle anglais USF pour « Unducted Single Fan »). Bien entendu, l'invention s'applique à d'autres types de turbomachines tels que les turboréacteurs, et en particulier double flux et double corps. L'invention s'applique de manière générale à une turbomachine qui comprend une soufflante ou une hélice qui soit carénée ou non carénée.

Dans la présente invention, et de manière générale, les termes « amont », « aval », « axial » et « axialement » sont définis par rapport à la circulation des gaz dans la turbomachine et par rapport à l'axe longitudinal X de la turbomachine. De même, les termes « radial », « radialement », « interne » et « externe » sont définis par rapport à un axe radial Z perpendiculaire à l'axe longitudinal X et au regard de l'éloignement par rapport à l'axe longitudinal X.

Une turbomachine comprend de manière générale, d'amont en aval, un compresseur basse pression ou (« booster » en anglais) (non représenté), un compresseur haute pression (non représenté), une chambre de combustion (non représentée), une turbine haute pression (non représentée) et une turbine basse pression (non représentée). Les rotors du compresseur basse pression, et de la turbine basse pression sont reliés mécaniquement par un arbre basse pression de manière à former un corps basse pression. Les rotors du compresseur haute pression et de la turbine haute pression sont reliés mécaniquement par un arbre haute pression de manière à former un corps haute pression. L'arbre basse pression s'étend à l'intérieur de l'arbre haute pression et sont coaxiaux à l'axe longitudinal X.

Chaque compresseur et chaque turbine comprend des étages d'aubes rotoriques et d'aubes statoriques qui sont alternés suivant l'axe longitudinal X. Dans la présente invention, nous entendons par le terme « aube statorique » ou « aube fixe », une aube qui n'est pas entraînée en rotation autour de l'axe longitudinal X de la turbomachine.

Sur la figure 1, l'hélice 2 est montée en amont du compresseur basse pression. L'hélice 2 comprend une pluralité d'aubes rotoriques 3 disposées autour de l'axe longitudinal X et s'étendant radialement depuis un rotor 4 formant le moyeu de l'hélice 2. Le rotor 4 est avantageusement centré sur l'axe longitudinal X.

Les aubes rotoriques 3 peuvent être à calage variable autour d'un axe de calage transversal à l'axe longitudinal X.

Un redresseur 5 est disposé en aval de l'hélice 2. Le redresseur 5 comprend une pluralité d'aubes de stator 6 (ou aubes fixes) connues sous le sigle anglais « OGV » pour Outlet Guide Vane. Les aubes de stator 6 sont réparties autour de l'axe longitudinal X et sont disposées en aval des aubes rotoriques 3 ou mobiles de l'hélice 2 de manière à redresser le flux d'air généré par celles-ci.

Le flux d'air F qui traverse l'hélice 2 est scindé en un flux primaire F1 et en un flux secondaire F2 par un bec de séparation 7. Ce dernier est agencé avantageusement en aval des aubes rotoriques 3. Le flux d'air primaire F1 circule dans une veine d'écoulement primaire 8 alors que le flux secondaire F2 circule radialement à l'extérieur de la veine d'écoulement primaire 8. Le flux primaire F1 traverse l'ensemble des compresseurs, de la chambre de combustion et l'ensemble des turbines, et est éjecté à l'extérieur par une tuyère primaire (non représentée). Le flux secondaire F2 circule radialement à l'extérieur des carters et balaie le redresseur 5 non caréné. Dans le cas d'un turboréacteur double flux ou à trois flux annulaires comprenant des aubes rotoriques d'une soufflante carénée, le flux secondaire F2 circule dans une veine d'écoulement secondaire.

Le bec de séparation 7 présente une forme de révolution. Plus précisément, le bec de séparation 7 présente une première paroi annulaire 9 qui permet de guider le flux d'air secondaire. La première paroi annulaire 9 s'étend suivant l'axe longitudinal X et est reliée à une paroi radialement interne 10 qui prolonge vers l'aval la première paroi annulaire 9. Le flux secondaire F2 est guidé le long de la paroi radialement interne 10 également. De manière avantageuse, mais non limitativement, le redresseur 5 est monté sur la paroi radialement interne 10.

Le bec de séparation 7 comprend avantageusement une deuxième paroi annulaire 11 qui permet de guider le flux primaire. La deuxième paroi annulaire 11 s'étend radialement à l'intérieur de la première paroi annulaire 9 et est reliée à cette dernière au niveau d'un bord amont 12. La deuxième paroi annulaire 11 est reliée à une paroi radialement externe 13 qui permet de guider le flux primaire. La paroi radialement externe 13 prolonge par exemple axialement la deuxième paroi annulaire 11 vers l'aval de la turbomachine. Dans le présent exemple, la paroi radialement externe 13 forme avec une paroi radialement interne 14 la veine d'écoulement primaire 8.

De manière avantageuse, mais non limitativement, le bord amont 12 du bec de séparation 7 délimite une entrée 16 de la veine primaire 8.

La turbomachine comprend des ailettes 15 qui sont configurées de manière à éviter qu'un objet étranger ne pénètre dans la veine d'écoulement primaire 8 et n'atteigne la chambre de combustion par exemple. Les ailettes 15 sont montées sur le rotor 4 et s'étendent radialement vers l'extérieur. Celles-ci sont agencées de manière avantageuse en aval des aubes rotoriques 3

3. Elles sont plus précisément disposées en amont du bec de séparation 7. Les ailettes 15 sont disposées autour de l'axe longitudinal X et de préférence de manière régulière. Le fait d'installer les ailettes 15 sur le rotor 4 permet que celles-ci soient entraînées en rotation également en même temps que les aubes rotoriques 3 de la soufflante ou de l'hélice, ce qui crée un effet centrifuge aidant à éviter l'ingestion des corps étrangers tels des volatils ou de la glace.

Suivant un exemple de réalisation, le nombre d'ailettes 15 est supérieur au nombre d'aubes rotoriques 3. De manière avantageuse, mais non limitativement, le nombre d'ailettes 15 est égal à au moins deux fois le nombre d'aubes rotoriques 3. Cette configuration permet d'obtenir un pas inter ailettes 15 (suivant la direction circonférentielle autour de l'axe longitudinal X) qui soit suffisamment petit pour que, par exemple, un oiseau ayant un poids de l'ordre de 1kg soit découpé par les ailettes 15 et au moins en partie entraîné vers l'extérieur par l'effet centrifuge.

Chaque ailette 15 comprend un bord d'attaque 15a et un bord de fuite 15b qui sont opposés ici sensiblement suivant l'axe longitudinal X. Avantageusement, mais non limitativement, chaque ailette 15 présente un rayon de courbure qui est minimal au niveau du bord d'attaque 15a et du bord de fuite 15b. Chaque ailette 15 comprend une face intrados 15i et une face extrados 15e qui relient le bord d'attaque 15a et le bord de fuite 15b. Chaque ailette 15 s'étend également entre une extrémité de pied 15c et une extrémité de tête 15d qui est libre. L'extrémité de pied 15c est implantée dans le rotor 4. Il n'y a pas de carénage autour des ailettes 15.

De manière avantageuse, mais non limitativement, chaque ailette 15 comprend une pluralité de sections transversales qui sont empilées le long d'une ligne d'empilement L entre l'extrémité de pied 15c et l'extrémité de tête 15d. La ligne d'empilement L passe par le centre de gravité de chaque section d'ailette 15 transversale.

Chaque ailette 15 présente en outre une corde C qui est un segment droit qui relie le bord d'attaque 15a et le bord de fuite 15b pour chaque section transversale. Par ailleurs, une ligne de squelette S relie également chaque bord d'attaque 15a à chaque bord de fuite 15b et se trouve à égale distance de la surface intrados 15i et de la surface extrados 15e. En d'autres termes, la ligne de squelette S est une ligne médiane entre la surface intrados 15i et la surface extrados 15e de l'ailette 15.

Suivant un mode de réalisation non représenté, les ailettes 15 sont à calage variable. Elles présentent chacun un axe de calage qui est sensiblement parallèle à l'axe radial. L'axe de calage peut être incliné d'environ 10° par rapport à l'axe radial Z. La turbomachine 1 peut comprendre un système de calage à cet effet qui comprend un moyen de commande tel un actionneur et un mécanisme de liaison reliant les extrémités de pieds des ailettes au moyen de commande.

De manière alternative, les ailettes 15 ne pivotent pas autour d'un axe de calage et tournent uniquement avec le rotor 4.

Suivant une caractéristique avantageuse, mais non limitative, chaque ailette 15 présente un rayon externe Rext qui est radial à l'axe longitudinal X. Dans la suite de la description, l'expression « rayon externe » sera utilisée pour l'ailette 15. Le rayon externe Rext est mesuré entre l'axe longitudinal X et l'extrémité de tête libre 15d, et de préférence en un point médian entre le bord d'attaque 15a et le bord de fuite 15b. Le rayon externe Rext des ailettes 15 est inférieur à la hauteur h2 des aubes rotoriques 3 de l'hélice 1. La hauteur h2 des aubes 3 est mesurée entre l'axe longitudinal X et une extrémité de tête 3d. Le rayon externe Rext peut être fonction de plusieurs paramètres dont au moins un est choisi dans le groupe comprenant la position axiale prédéterminée de chaque ailette 15 et un angle critique d'ingestion.

Dans la présente demande, nous entendons par l'expression « angle critique d'ingestion », un angle d'inclinaison $\alpha$ qui est mesuré entre l'axe longitudinal X et une droite inclinée D1 qui définit la trajectoire de l'objet étranger O, ici un oiseau. L'angle critique d'ingestion dépend des missions de l'aéronef et de la certification de la turbomachine. Les missions de l'aéronef définissent son enveloppe de vol (ensemble des points vitesse de vol, incidence, etc.) et principalement son taux d'incidence en montée (l'angle de l'aéronef dans sa phase de décollage) ou de descente dans son plan de vol. La droite inclinée D1 passe par un point minimum du bec de séparation 7. Le point minimum (mesuré radialement depuis l'axe longitudinal X) est situé au niveau du bord amont 12.

Dans le présent exemple, chaque ailette 15 est inscrite dans cet angle d'inclinaison $\alpha$ formé entre l'axe longitudinal X et la droite inclinée D1, de sorte que l'objet étranger O voyageant selon la droite inclinée D1 entre en contact avec l'ailette sur toute sa hauteur. En particulier, l'extrémité de tête 15d libre de chaque ailette 15 est radialement à l'intérieur de la droite inclinée D1.

De manière avantageuse, mais non limitativement, l'angle d'inclinaison $\alpha$ est compris entre 15° et 30°.

De manière avantageuse, mais non limitativement, chaque ailette 15 est agencée à une position axiale prédéterminée (distance axiale prédéterminée D2) par rapport au bec de séparation 7. La position axiale est déterminée par rapport au bord amont 12 du bec de séparation. La position axiale prédéterminée permet que quel que soit l'angle d'arrivée de l'objet étranger O, celui-ci rentrera en contact avec au moins une ailette 15.

De manière avantageuse, mais non limitativement, la distance axiale prédéterminée D2 mesurée depuis le bord amont 12 et un point entre le bord de fuite 15b et le bord d'attaque 15a de chaque ailette 15 dans un plan radial est compris entre 30 et 130 mm. Avantageusement, mais non limitativement, plus la distance axiale prédéterminée D2 est grande, plus le rayon externe Rext des ailettes 15 doit être important. La relation entre le rayon externe Rext de chaque ailette 15 et la position axiale (distance axiale prédéterminée D2 entre les deux points) de chaque ailette 15 est exprimée par la formule mathématique suivante :

$$\text{Rext}_{\text{ailette}}\,(x) \geq R_{\text{bec}} + D2 * \tan(\alpha) - p$$

Avec :

- Rext étant le rayon externe à l'extrémité de tête 15d de chaque ailette 15, en mm, au niveau d'un point, entre le bord d'attaque 15a et le bord de fuite 15b, mesuré à partir de l'axe longitudinal X,

- Rbec étant le rayon du bec de séparation mesuré au niveau du bord amont 12 du bec de séparation et à partir de l'axe longitudinal X (le bord amont 12 étant le point le plus en amont par rapport à l'axe longitudinal X), en mm.

- D2 étant la distance axiale prédéterminée, en (mm), qui est définie entre le bec de séparation 7 et un point de tête 15d de l'ailette 15 situé entre son bord d'attaque 15a et son bord de fuite 15b.

- p présente une valeur, de préférence 40 mm, qui correspond sensiblement à un rayon d'un corps d'un objet étranger O, en particulier un oiseau, de forme générale sensiblement circulaire et ayant un poids d'environ 1 kg,

- $\alpha$ étant l'angle d'inclinaison de la droite inclinée D1 qui est exprimé en radian.

La formule mathématique ci-dessus donne un rayon (Rext) minimum que doit atteindre l'ailette 15 à son extrémité de tête 15d, au niveau d'un point, entre le bord d'attaque 15a et le bord de fuite 15b. La formule mathématique ci-dessus définie donc le rayon Rext de l'ailette 15 en fonction de sa position le long de l'axe longitudinal X par rapport au bord amont 12 du bec de séparation 7. Cette fonction Rext(x) est illustrée par une droite D sur la Fig. 1. La droite D est parallèle à la droite D1 à une distance p selon l'axe radiale Z. La fonction Rext(x) définie aussi le segment d'extrémité de tête 15d de l'ailette 15 ; l'extrémité de tête 15d de l'ailette 15 est donc tangente à la droite D. La fonction des ailettes de découper ou de hacher un objet étranger O sera optimum si le rayon Rext de l'ailette 15 atteint ou dépasse cette droite D.

En référence aux figures 2, 3 et 4, chaque ailette 15 est inclinée par rapport à l'axe radial Z en formant au moins un angle dièdre $\beta$. L'angle dièdre $\beta$ peut être mesuré au niveau du bord d'attaque 15a et/ou au niveau de bord de fuite 15b.

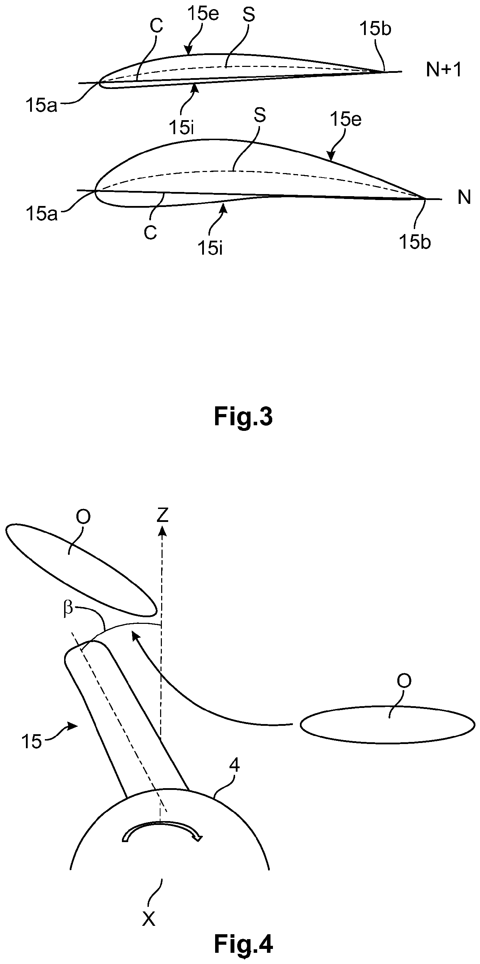

Sur les figures 2 et 3, nous considérons une première section N d'ailette (à un premier rayon donné mesuré depuis l'axe longitudinal) et une deuxième section d'ailette N+1 (à un deuxième rayon donné mesuré depuis l'axe longitudinal). Un premier angle dièdre $\beta$1 est

mesuré entre une première droite D3 passant par le bord d'attaque 15a des première et deuxième sections N, N+1 et l'axe radial Z. Un deuxième angle dièdre (non représenté) peut être mesuré entre une deuxième droite (non représentée) passant par le bord de fuite de chaque première et deuxième section et entre l'axe radial.

L'angle dièdre est compris entre 10° et 45°.

L'inclinaison des ailettes 15 est orientée de manière opposée au sens de rotation du rotor 4. Cette orientation de l'inclinaison permet d'augmenter l'effet de centrifugation. Le côté de l'ailette 15 se trouvant en amont dans la direction de rotation de l'hélice autour de l'axe longitudinal X va être le côté impacté par l'oiseau ou la glace par exemple. Appliquer un angle opposé à cette surface (angle dièdre) permet ainsi d'augmenter l'effet centrifuge des ailettes 15 et de projeter l'oiseau vers des rayons suivant l'axe radial Z plus élevés comme cela est représenté sur la figure 4.

Suivant un autre mode de réalisation, les ailettes 15 sont équipées de moyens de dégivrage (non représentés) qui permettent de dégivrer et/ou d'éviter la formation de givre ou glace. En effet, étant donné la position des ailettes 15 sur le rotor 4, de la glace pourrait se former sur les ailettes 15 et pénétrer dans la veine d'écoulement primaire 8 et/ou endommager des aubes statoriques (non représentées) agencées au niveau de l'entrée 16 de la veine d'écoulement primaire 8. Les moyens de dégivrage peuvent comprendre un fil chauffant électrique qui est intégré dans le corps de chaque ailette 15, un fluide caloporteur agencé dans le corps de chaque ailette 15, peuvent se présenter sous la forme d'un échangeur de de chaleur, etc. Le fluide caloporteur peut être un flux d'air prélevé dans la turbomachine ou de l'huile permettant de lubrifier des organes de la turbomachine.

De la sorte, les ailettes 15 montées solidaires en rotation du rotor 4 permettent d'évacuer les corps étrangers radialement vers l'extérieur avec un effet centrifuge ou de réduire leur taille en les découpant grâce à la vitesse d'impact.

**Revendications**

**1.** Module de turbomachine comprenant :

- un rotor (4) centré sur un axe longitudinal (X),
- une pluralité d'aubes rotoriques (3) montées sur le rotor (4) et s'étendant radialement par rapport à l'axe longitudinal (X), et
- un bec de séparation (7) disposé en aval des aubes rotoriques (3) et séparant un flux d'air traversant les aubes rotoriques (3) en un flux primaire (F1) et en un flux secondaire (F2), le bec de séparation (4) comprenant un bord amont (12) délimitant une entrée (16) d'une veine primaire dans laquelle circule le flux primaire (F1), **caractérisé en ce que** le module comprend des ailettes (15) montées solidaires en rotation du rotor (4) et s'étendant radialement par rapport à l'axe longitudinal, les ailettes (15) étant agencées en aval des aubes rotoriques (3) et en amont du bec de séparation (7).

**2.** Module de turbomachine selon la revendication précédente, **caractérisé en ce que** le nombre d'ailettes (15) est supérieur au nombre d'aubes rotoriques (3).

**3.** Module de turbomachine selon la revendication 1 ou 2, **caractérisé en ce que** le nombre d'ailettes (15) est égal à deux fois le nombre d'aubes rotoriques (3).

**4.** Module de turbomachine selon la revendication précédente, **caractérisé en ce que** chaque ailette (15) comprend une extrémité de tête (15d) disposée radialement à l'intérieur d'une droite inclinée (D1) par rapport à l'axe longitudinal (X) et passant par un point minimum du bec de séparation (7), en formant un angle d'inclinaison (α) compris entre 15° et 30°.

**5.** Module de turbomachine selon la revendication précédente, **caractérisé en ce que** chaque ailette (15) présente un rayon externe (Rext) qui est fonction de la position axiale de chaque ailette (15) par rapport au bec de séparation (7), une relation entre le rayon externe et la position axiale étant exprimée par la formule suivante :

$$\text{Rext}_{\text{ailette}}(x) \geq R_{\text{bec}} + D2 * \tan(\alpha) - p$$

avec

- Rext étant le rayon externe à l'extrémité de tête (15d) de chaque ailette (15), au niveau d'un point entre un bord d'attaque (15a) et un bord de fuite (15b) de l'ailette (15), mesuré à partir de l'axe longitudinal (X),
- Rbec étant le rayon du bec de séparation (7) mesuré au niveau du bord amont (12) du bec de séparation (7) et à partir de l'axe longitudinal (X),
- D2 étant la distance axiale prédéterminée entre deux points et définie entre le bec de séparation (7) et un point de tête (15d) de l'ailette (15) situé entre son bord d'attaque (15a) et son bord de fuite (15b),
- p présentant une valeur correspondant sensiblement à un rayon d'un corps d'un objet étranger (O) de forme sensiblement circulaire et ayant un poids d'environ 1 kg, et
- α étant l'angle d'inclinaison de la droite d'inclinaison (D1).

**6.** Module de turbomachine selon la revendication précédente, **caractérisé en ce que** chaque ailette (15) est inclinée par rapport à l'axe radial perpendiculaire à l'axe longitudinal (X) en formant au moins un angle dièdre, l'angle dièdre étant compris entre 10° et 45°.

7. Module de turbomachine selon la revendication précédente, **caractérisé en ce que** chaque ailette (15) comprend une pluralité de sections qui sont empilées le long d'une ligne d'empilement (L) entre l'extrémité de pied (15c) et l'extrémité de tête (15d), un premier angle dièdre étant mesuré entre une première droite passant par le bord d'attaque d'une première section (N) et d'une deuxième section (N+1), et l'axe radial.

8. Module de turbomachine selon l'une quelconque des revendications précédentes, **caractérisé en ce que** chaque ailette (15) est inclinée de manière opposée au sens de rotation du rotor (4).

9. Module de turbomachine selon l'une quelconque des revendications précédentes, **caractérisé en ce que** les ailettes (5) sont équipées de moyens de dégivrage.

10. Turbomachine (1) comprenant un module de turbomachine selon l'une quelconque des revendications précédentes.

**Fig.1**

**Fig.2**

**Fig.3**

**Fig.4**

Europäisches Patentamt

European Patent Office

Office européen des brevets

# RAPPORT DE RECHERCHE EUROPEENNE

Numéro de la demande

EP 23 30 7169

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2021/156317 A1 (PHELPS BENEDICT R [GB] ET AL) 27 mai 2021 (2021-05-27) | 1-4,8-10 | INV.<br>F02C7/05 |
| A | * alinéa [0082] - alinéa [0086]; figures 1,2,4 *<br>----- | 5-7 | F02C7/055<br>F02K3/02 |
| X | US 5 345 760 A (GIFFIN III ROLLIN G [US]) 13 septembre 1994 (1994-09-13)<br>* colonne 7, ligne 49 - ligne 66; figure 6 *<br>----- | 1-4,8-10 | |
| X | FR 2 319 019 A1 (ROLLS ROYCE [GB]) 18 février 1977 (1977-02-18) | 1-4,8-10 | |
| A | * page 2, ligne 23 - page 5, ligne 10; figures 1-3 *<br>----- | 5-7 | |
| X | DE 19 04 230 A1 (GEN ELECTRIC) 17 décembre 1970 (1970-12-17)<br>* page 5 - page 6; figure 2 *<br>----- | 1-3,8-10 | |

**DOMAINES TECHNIQUES RECHERCHES (IPC)**

F02C
F02K
F01D

Le présent rapport a été établi pour toutes les revendications

| Lieu de la recherche | Date d'achèvement de la recherche | Examinateur |
|---|---|---|
| La Haye | 21 mai 2024 | Robelin, Bruno |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 30 7169

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-05-2024

| Document brevet cité au rapport de recherche | Date de publication | Membre(s) de la famille de brevet(s) | Date de publication |
|---|---|---|---|
| US 2021156317 A1 | 27-05-2021 | CN 112943689 A | 11-06-2021 |
| | | EP 3828384 A1 | 02-06-2021 |
| | | US 2021156317 A1 | 27-05-2021 |
| US 5345760 A | 13-09-1994 | AUCUN | |
| FR 2319019 A1 | 18-02-1977 | DE 2632155 A1 | 20-01-1977 |
| | | FR 2319019 A1 | 18-02-1977 |
| | | GB 1497477 A | 12-01-1978 |
| | | JP S574824 B2 | 27-01-1982 |
| | | JP S5236211 A | 19-03-1977 |
| | | US 4055042 A | 25-10-1977 |
| DE 1904230 A1 | 17-12-1970 | AUCUN | |

EPO FORM P0460

Pour tout renseignement concernant cette annexe : voir Journal Officiel de l'Office européen des brevets, No.12/82